(19) Europäisches Patentamt

European Patent Office

Office européen des brevets

(11) **EP 1 416 019 B1**

(12) **EUROPÄISCHE PATENTSCHRIFT**

(45) Veröffentlichungstag und Bekanntmachung des Hinweises auf die Patenterteilung:
**18.05.2005 Patentblatt 2005/20**

(51) Int Cl.⁷: $C09D\ 5/02$, C09D 7/02, C09D 7/12

(21) Anmeldenummer: **03017316.5**

(22) Anmeldetag: **31.07.2003**

(54) **Verwendung von Gradientencopolymeren als Dispergiermittel zur Behandlung von Pigmenten und Feststoffen**

Use of gradient polymers as dispersing agent for the treatment of pigments and solids

Utilisation de polymères gradient comme agent dispersant pour le traitement de pigments et de solides

(84) Benannte Vertragsstaaten:
**AT BE BG CH CY CZ DE DK EE ES FI FR GB GR HU IE IT LI LU MC NL PT RO SE SI SK TR**

(30) Priorität: **07.08.2002 DE 10236133**

(43) Veröffentlichungstag der Anmeldung:
**06.05.2004 Patentblatt 2004/19**

(73) Patentinhaber: **Byk-Chemie GmbH**
**46483 Wesel (DE)**

(72) Erfinder:
• **Göbelt, Bernd, Dr.**
**46483 Wesel (DE)**
• **Haubennestel, Karlheinz**
**46487 Wesel (DE)**
• **Krappe, Udo, Dr.**
**46446 Emmerich (DE)**

• **Valentina, Petra Della**
**46535 Dinslaken (DE)**

(74) Vertreter: **Leifert & Steffan**
**Patentanwälte,**
**Burgplatz 21-22**
**40213 Düsseldorf (DE)**

(56) Entgegenhaltungen:
**WO-A-01/44389        WO-A-97/18247**

• **KRYSZEWSKI M: "GRADIENT POLYMERS AND COPOLYMERS" POLYMERS FOR ADVANCED TECHNOLOGIES, JOHN WILEY AND SONS, CHICHESTER, GB, Bd. 9, Nr. 4, 1. April 1998 (1998-04-01), Seiten 244-259, XP000766646 ISSN: 1042-7147**

**Beschreibung**

Die Erfindung betrifft die Verwendung von Gradientencopolymeren, die entlang der Polymerkette einen Übergang von hydrophilen zu hydrophoben Eigenschaften besitzen, als Dispergiermittel insbesondere zur Behandlung von Pigmenten und Feststoffen. Des weiteren betrifft die Erfindung Überzugsmittel und Formmassen, die Gradientencopolymere, die entlang der Polymerkette einen Übergang von hydrophilen zu hydrophoben Eigenschaften besitzen, als Dispergiermittel enthalten.

Um Feststoffen in einem flüssigen oder festen Medium, wie zum Beispiel in Lacken, wässrigen Pigmentdispersionen oder Formmassen, die zum Beispiel duroplastische und thermoplastische Polymere sind, homogen zu verteilen und gegebenenfalls auch zu stabilisieren werden Dispergiermittel als Hilfsstoffe hinzugegeben. Hierfür müssen diese zwei verschiedene Eigenschaften aufweisen. Erstens sollen sie mit der Feststoffoberfläche in Wechselwirkung treten, um deren Benetzung zu erleichtern. Dies wird mit bestimmten chemischen Gruppen, die als Haftgruppen bezeichnet werden, erreicht. Beispiele für hydrophile Haftgruppen sind tertiäre Amine, Ammoniumsalze, Phosphorsäureester, Carbonsäuregruppen, Amid-, Urethan- oder Harnstoffstrukturen. Für wässrige Dispersionen können hydrophobe Strukturen wie zum Beispiel Alkylgruppen, Phenyl- und Benzylstrukturen als Haftgruppen verwendet werden, wie es zum Beispiel in Adv. Mater. **1998**, *10*, 1215 beschrieben ist. Zweitens sollen Dispergiermittel Bereiche im Molekül besitzen, die mit dem Medium gut verträglich sind. Dies sind für organische Medien zum Beispiel hydrophobe Strukturen wie Alkyl- oder Arylstrukturen. Für wässrige Medien sollten hydrophile Strukturen, die wasserlöslich sind, wie Polyethylenglycole oder versalzte Carbonsäuren verwendet werden.

Im Folgenden werden Monomere, die den Teil des Dispergiermittels aufbauen, der mit dem flüssigen oder festen Medium verträglich ist, als "Monomere A" bezeichnet. Monomere, die Funktionalitäten oder Haftgruppen tragen, welche mit der Feststoffoberfläche der zu dispergierenden Stoffe in Wechselwirkung treten, werden im Folgenden als "Monomere B" bezeichnet. Diese Funktionalitäten oder Haftgruppen können auch durch chemische Reaktionen nach der Polymerisation erzeugt werden.

Häufig werden als Dispergiermittel Polymere auf der Basis von ethylenisch ungesättigten Monomeren, wie zum Beispiel Methacrylate, Acrylate oder Styrole eingesetzt. Auf herkömmliche Weise werden diese Polymere mittels freier radikalischer Polymerisation erhalten. Hierbei kann nur eine statistische Verteilung der Monomeren A und B in der Polymerkette erzielt werden. Solche Verbindungen sind beispielsweise in US 5688858 beschrieben.

Mit der Entwicklung kontrollierter und lebender Polymerisationsverfahren wurde es möglich auf einfache Weise strukturierte Polymere zu erzeugen.

Mit Group Transfer Polymerization (GTP) können zum Beispiel Dispergiermittel auf der Basis von AB-Blockcopolymeren hergestellt werden. Beispiele hierfür sind in *EP-A-0 218 436, EP-A-0 329 873, EP-A-0 518225, EP-A-0 323 181* und *US 4925765* beschrieben.

Eine Polymerisationsmethode, mit der eine große Zahl von Monomeren polymerisiert werden kann, ist die Atom Transfer Radical Polymerization (ATRP), die zum Beispiel in *WO 96/30421* beschrieben ist. Beispiele für verschiedene Monomeren, die sich mit ATRP polymerisieren oder copolymerisieren lassen, finden sich in *Chem. Rev.* **2001,** *101*, 2921. Die Verwendung von linearen Polymeren, die mit ATRP dargestellt werden, als Dispergiermitteln wird in *WO 00/40630* und *WO 01/44389* beschrieben.

Trotz dieser neuen Entwicklung von Dispergiermitteln besteht weiterhin der dringende Bedarf an besseren Dispergiermitteln.

Eine Aufgabe der vorliegenden Erfindung bestand daher darin eine Möglichkeit zur Bereitstellung besserer Dispersionen zu finden, die es insbesondere erlaubt Dispersionen zu erhalten, die nur geringe schaumbildende Neigung besitzen, die besonders in Überzugsmitteln bei hohem Glanz und guter Transparenz und geringer Trübungsneigung keine Stippenbildung verursachen.

Überraschenderweise wurde gefunden, dass die gestellte Aufgabe durch Verwendung von Gradientencopolymeren als Dispergiermittel, wobei die Gradientencopolymere durch lebende, kontrollierte Polymerisation von ethylenisch ungesättigten Monomeren unter Verwendung eines monofunktionellen Initiators, der kein Polymer ist, und wobei die Gradientencopolymere entlang der Polymerkette einen Übergang von hydrophilen zu hydrophoben Eigenschaften besitzen, erhältlich sind, in dem

a) ein Monomer (I) kontinuierlich zu einem Monomer (II) unter Reaktion zugeleitet wird oder
b) ein Monomer (I) und ein Monomer (II) mit unterschiedlichen Dosierraten kontinuierlich einem Reaktionsbehälter zur Reaktion zugeleitet werden,

wobei entweder durch das Monomer (I) oder durch das Monomer (II) Gruppen in das Gradientencopolymer eingeführt werden, die als solche oder nach weiterer chemischer Umsetzung des Gradientencopolymers in Wechselwirkung mit dem zu dispergierenden Feststoff oder den zu dispergierenden Feststoffen treten und durch das andere Monomer Gruppen in das Gradientencopolymer eingeführt werden, die mit dem flüssigen oder festen Dispersionsmedium verträglich sind,

wobei entweder das Monomer (I), oder die Produkte aus der weiteren chemischen Umsetzung des Monomeren (I) einerseits, oder das Monomer (II), oder die Produkte der weiteren chemischen Umsetzung des Monomers (II) andererseits hydrophobe Eigenschaften besitzen und das jeweilige andere Monomer oder die Produkte der weiteren chemischen Umsetzung des jeweiligen anderen Monomers hydrophile Eigenschaften besitzen, wobei die Eigenschaften hydrophob und hydrophil folgendermaßen definiert sind:

hydrophile Eigenschaften liegen bei einem Löslichkeitsparameter größer oder gleich 22 $J^{1/2}/cm^{3/2}$ und hydrophobe Eigenschaften liegen bei einem Löslichkeitsparameter kleiner 22 $J^{1/2}/cm^{3/2}$ vor,
und wobei die Begriffe "Monomer (I)" und "Monomer (II)" auch Mischungen aus Monomeren (I) einerseits und Monomeren (II) andererseits umfassen, gelöst wird.

Die Berechnungsmethode (Inkrementmethode von Hoftyzer-Van Krevelen) und experimentell ermittelte Werte für die Löslichkeitsparameter sind in US *6362274* B1, J. Applied Polym. Sci. **2000**, *78*, 639, und in der folgenden Monographie erläutert: D. W. van Krevelen, "Properties of polymers. Their correlation with chemical structure; their numerical estimation and prediction from additive group contributions", 3. Auflage, Elsevier, 1990, S. 189 - 225.

Die Löslichkeitsparameter gelten für hypothetische Polymere, die nur aus den Monomeren (I), Mischungen aus Monomeren (I) oder den Produkten einer weiteren chemischen Umsetzung dieser Monomere entstehen oder alleinig aus den Monomeren (II), Mischungen aus Monomeren (II) oder den Produkten einer weiteren chemischen Umsetzung dieser Monomere entstehen.

Unter dem Begriff "Produkte einer weiteren chemischen Umsetzung dieser Monomere" wird das Monomer, das in das Polymer eingebaut ist und durch eine oder mehrere weitere chemische Umsetzungen entstanden ist, verstanden. Ein Beispiel hierzu ist die Einführung von Methacrylsäure als Umsetzungsprodukt von t-Butylmethacrylat, das als Monomer polymerisiert wird und nachträglich zur gewünschten Methacrylsäure verseift wird, in das Polymer. Hierbei ist der Löslichkeitsparameter der Methacrylsäure und nicht des t-Butylmethacrylates zu verwenden.

Diese Dispergiermittel, die entlang der Polymerkette einen Übergang von hydrophilen zu hydrophoben Eigenschaften besitzen, zeigen ein besseres Dispergierverhalten als statistische Copolymere und Blockcopolymere. Im Vergleich zu Dispergiermitteln mit hydrophilen und hydrophoben Eigenschaften auf der Basis von Blockcopolymeren zeigen solche Dispergiermittel mit Gradientenstruktur ein ausgesprochen geringeres schaumstabilisierendes Verhalten. Da Schaum in den Anreibeaggregaten das Volumen für das Mahlgut vermindert und somit den Durchsatz verkleinert ist eine geringe Schaumstabilisierung durch das Dispergiermittel besonders wünschenswert.

Gradientencopolymere sind Copolymere, die z. B. aus zwei Monomeren A und B bestehen, in deren Einzelketten ein Gradient der Verteilung der Monomerbausteine entlang den Ketten besteht. Das eine Kettenende ist reich an A- und das andere Kettenende ist reich an B-Bausteinen. Diese Polymere sind durch lebende, kontrollierte Polymerisationsverfahren darstellbar. Beispiele für solche Polymerisationsverfahren sind:

1) kontrollierte, radikalische Polymerisation mit Xanthogensäureestern als Polymerisationsregler, wie beispielsweise in *WO 98/58974* beschrieben,
2) kontrollierte, radikalische Polymerisation mit Dithioestern als Polymerisationsregler, wie beispielsweise in *WO 98/01478* beschrieben,
3) kontrollierte, radikalische Polymerisation mit Dithiocarbamaten als Polymerisationsregler, wie beispielsweise in *WO 99/31144* beschrieben,
4) kontrollierte Polymerisation mit Nitroxylverbindungen als Polymerisationsregler (NMP), wie beispielsweise in *Chem. Rev.* **2001,** *101,* 3661 beschrieben,
5) kontrollierte radikalische Polymerisation mit Tetraphenylethan, wie beispielsweise in Macromol. Symp. **1996,** *111,* 63 beschrieben,
6) kontrollierte radikalische Polymerisation mit 1,1-Diphenylethen als Polymerisationsregler, wie beispielsweise in Macromolecular Rapid Communications, **2001**, *22,* 700 beschrieben,
7) "Atom Transfer Radical Polymerization" (ATRP), wie beispielsweise in *WO 96/30421* beschrieben,
8) kontrollierte radikalische Polymerisation mit Inifertern, wie beispielsweise in Makromol. Chem. Rapid. Commun. **1982,** *3*, 127 beschrieben,
9) "Group Transfer Polymerization" (GTP) wie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff. beschrieben wird,
10) kontrollierte radikalische Polymerisation mit Organokobaltkomplexen, wie sie beispielsweise in J. Am. Chem. Soc. **1994,** *116,* 7973 beschrieben wird.

Die Polymerisationsmethoden 1) - 3) werden im Folgenden als RAFT-Polymerisationen bezeichnet.

Herstellungsbeispiele für Gradientencopolymere finden sich zum Beispiel in *WO/9718247* und J. *Phys. Org. Chem.* **2000,** *13*, 775. Hierin werden zwei Verfahren beschrieben:

1) Es werden alle Monomeren vorgelegt und durch Ausnutzung der verschiedenen Copolymerisationsparameter der Monomeren ein Gradient entlang der Polymerkette erzeugt.
2) Es kann durch kontinuierliches Zuleiten eines Monomers zum anderen Monomeren während der Reaktion oder durch zwei unterschiedliche Dosierraten der beiden Monomeren ein Gradient entlang der Polymerkette erzeugt werden.

Die Methode 2) ist das Verfahren durch welches die in der Erfindung zu verwendenden Dispergiermittel mit Gradiencopolymerstruktur herstellbar sind. Sie erlaubt über die Wahl der Zuleitgeschwindigkeit der Monomeren eine Steuerung des Gradienten und somit eine differenziertere Gestaltung des Gradientencopolymers um den Übergang von hydrophilen Eigenschaften zu hydrophoben Eigenschaften entlang der Polymerkette den jeweiligen Erfordernissen anzupassen.

Der Gradient muß so beschaffen sein, dass das eine Kettenende hydrophob und das andere Kettenende hydrophil ist. Zur Beurteilung der Steilheit des Gradienten läßt sich die Differenz der Löslichkeitsparameter zwischen den hydrophilen und hydrophoben Kettenenden sowie die Verteilung der unterschiedlichen Monomere entlang der Polymerkette heranziehen.

Gradientencopolymere grenzen sich zu Blockcopolymeren durch den oben beschriebenen fließenden Übergang zwischen den Monomeren A und B ab. Blockcopolymere haben einen sprunghaften Übergang zwischen den Monomeren in der Polymerkette, der als Grenze zwischen den einzelnen Blöcken definiert ist. Auch die Darstellung von Blockcopolymeren verläuft auf einem anderen Weg. Beispielsweise wird bei der Darstellung eines AB-Blockcopolymeren zuerst das Monomer A polymerisiert und zu einem späteren Zeitpunkt wird das Monomer B hinzugegeben. Neben dieser chargenweisen Zugabe in das Reaktionsgefäß kann ein ähnliches Ergebnis auch dadurch erzielt werden, daß man bei einer kontinuierlichen Zugabe der beiden Monomeren deren Zusammensetzungen zu bestimmten Zeitpunkten sprunghaft ändert.

Gegenstand der Erfindung ist daher die Verwendung von Gradientencopolymeren als Dispergiermittel, wobei die Gradientencopolymere durch lebende, kontrollierte Polymerisation von ethylenisch ungesättigten Monomeren unter Verwendung eines monofunktionellen Initiators, der kein Polymer ist, und wobei die Gradientencopolymere entlang der Polymerkette einen Übergang von hydrophilen zu hydrophoben Eigenschaften besitzen, erhältlich sind, in dem

a) ein Monomer (I) kontinuierlich zu einem Monomer (II) unter Reaktion zugeleitet wird oder
b) ein Monomer (I) und ein Monomer (II) mit unterschiedlichen Dosierraten kontinuierlich einem Reaktionsbehälter zur Reaktion zugeleitet werden,

wobei entweder durch das Monomer (I) oder durch das Monomer (II) Gruppen in das Gradientencopolymer eingeführt werden, die als solche oder nach weiterer chemischer Umsetzung des Gradientencopolymers in Wechselwirkung mit dem zu dispergierenden Feststoff oder den zu dispergierenden Feststoffen treten und durch das andere Monomer Gruppen in das Gradientencopolymer eingeführt werden, die mit dem flüssigen oder festen Dispersionsmedium verträglich sind,
wobei entweder das Monomer (I), oder die Produkte aus der weiteren chemischen Umsetzung des Monomeren (I) einerseits, oder das Monomer (II), oder die Produkte der weiteren chemischen Umsetzung des Monomers (II) andererseits hydrophobe Eigenschaften besitzen und das jeweilige andere Monomer oder die Produkte der weiteren chemischen Umsetzung des jeweiligen anderen Monomers hydrophile Eigenschaften besitzen, wobei die Eigenschaften hydrophob und hydrophil folgendermaßen definiert sind:

hydrophile Eigenschaften liegen bei einem Löslichkeitsparameter größer oder gleich 22 $J^{1/2}/cm^{3/2}$ und hydrophobe Eigenschaften liegen bei einem Löslichkeitsparameter kleiner 22 $J^{1/2}/cm^{3/2}$ vor,
und wobei die Begriffe "Monomer (I)" und "Monomer (II)" auch Mischungen aus Monomeren (I) einerseits und Monomeren (II) andererseits umfassen.

Die hierfür verwendeten monofunktionellen nicht polymeren Initiatoren starten eine Polymerkette mit nur einer Wachstumsrichtung. Die im jeweiligen lebenden, kontrollierten Polymerisationsverfahren eingesetzten monofunktionellen Initiatoren sind dem Durchschnittsfachmann bekannt.

Monofunktionelle Initiatoren für "Atom Transfer Radical Polymerization" sind z. B. Halogenalkane mit 1 bis 10 C-Atome, wie Tetrabromkohlenstoff und 1,1,1-Trichlorethan;
Halogenalkohole mit 2 bis 10 C-Atome, wie 2,2,2-Trichlorethanol;
2-Halogencarbonsäure und deren Ester mit 2 bis 20 C-Atome, wie Chloressigsäure,

2-Brompropionsäure, 2-Brompropionsäuremethylester, 2-Chlorpropionsäuremethylester, 2-Bromisobuttersäureethylester und 2-Chlorisobuttersäureethylester;

2-Halogencarbonitrile mit 2 bis 10 C-Atome, wie 2-Chloracetonitril und 2-Brompropionitril;

Alkyl- und Arylsulfonsäurechloride mit 2 bis 10 C-Atome, wie Methansulfonsäurechlorid und Benzolsulfonsäurechlorid; und

1-Aryl-1-halogenalkane mit 7 bis 20 C-Atomen, wie zum Beispiel Benzylchlorid, Benzylbromid und 1-Brom-1-phenylethan.

Für die Polymerisationstechniken 1) - 4), 6) und 10) werden als Initiatoren beispielsweise

Azoinitiatoren wie Azodiisobutyronitril,

Peroxidverbindungen, wie Dibenzoylperoxid und Dicumylperoxid

als auch Persulfate wie Kaliumperoxodisulfat eingesetzt.

Weiterhin ist es Stand der Technik bei einigen Polymerisationsverfahren Addukte des Initiators mit dem Polymerisationsregler einzusetzen, wie zum Beispiel für NMP Alkoxyamine. Beispiele hierfür sind in *Chem. Rev.* **2001**, *101*, 3661, "V. Approaches to Alkoxyamines" angegeben.

Bei GTP werden als Initiatoren Silylketenacetale wie zum Beispiel [(1-Methoxy-2-methyl-1-propenyl)oxy]trimethylsilan verwendet. Weitere Beispiele sind in *US 4822859, US 4780554* und *EP 0184692 B1* zu finden.

Vorzugsweise besitzen die erfindungsmäß als Dispergiermittel zu verwendenden Gradientencopolymere ein zahlenmittleres Molekulargewicht $M_n$ von 2 000 bis 20 000 g/mol.

Wie in WO 97/28200 beschrieben werden hydrophobe und hydrophile Monomere folgendermaßen eingeteilt:

Hydrophile Monomere besitzen ein Löslichkeitsparameter größer oder gleich 22 $J^{1/2}/cm^{3/2}$. Hydrophobe Monomere besitzen ein Löslichkeitsparameter kleiner 22 $J^{1/2}/cm^{3/2}$.

Je nach Anwendung des Dispergiermittels können prinzipiell alle ethylenisch ungesättigten Monomere und Produkte einer weiteren chemischen Umsetzung dieser Monomere als A- oder B-Monomere fungieren, wobei entweder die Monomeren A hydrophob und die Monomeren B hydrophil sind oder die Monomeren A hydrophil und die Monomeren B hydrophob sind. Beispielsweise werden in unpolaren Medien hydrophobe Monomere als A-Monomere verwendet und hydrophile Monomere als B-Monomere eingesetzt. Dispergiermittel für wässrige Systeme enthalten als A-Monomere hydrophile Monomere und als B-Monomere hydrophobe Monomere, die auf den Feststoff aufziehen.

Beispiele für ethylenisch ungesättigte Monomere sind nachfolgend genannt, wobei die Schreibweise (Meth)acrylat sowohl Acrylate als auch Methacrylate einschließt:

Alkyl(meth)acrylate von geradkettigen, verzweigten oder cycloaliphatischen Alkoholen mit 1 bis 22 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Lauryl(meth)acrylat, 2-Ethylhexyl(meth)acrylat, Stearyl(meth)acrylat, Cyclohexyl(meth)acrylat, Isobornyl(meth)acrylat, t-Butyl(meth)acrylat;

Aryl(meth)acrylate, wie Benzylmethacrylat oder Phenylacrylat, wobei die Arylreste jeweils unsubstituiert oder bis zu vierfach substituiert sein können, wie zum Beispiel 4-Nitrophenylmethacrylat;

Acrylsäure, Methacrylsäure, Maleinsäure und deren Salze;

Anhydride, wie zum Beispiel Maleinsäureanhydrid;

Hydroxyalkyl(meth)acrylate von geradkettigen, verzweigten oder cycloaliphatischen Diolen mit 2 bis 36 C-Atomen, wie zum Beispiel
3-Hydroxypropylmethacrylat, 3,4-Dihydroxybutylmonomethacrylat,
2-Hydroxyethyl(meth)acrylat, 4-Hydroxybutyl(meth)acrylat,
2-Hydroxypropylmethacrylat, 2,5-Dimethyl-1,6-hexandiolmonomethacrylat; Mono(meth)acrylate von Ethern, Polyethylenglykolen, Polypropylenglycolen oder gemischten Polyethylen/propylenglycolen mit 5 bis 80 C-Atomen, wie zum Beispiel Tetrahydrofurfurylmethacrylat, Methoxyethoxyethylmethacrylat,
1-Butoxypropylmethacrylat, Cyclohexyloxymethylmethacrylat,
Methoxymethoxyethylmethacrylat, Benzyloxymethylmethacrylat, Furfurylmethacrylat,
2- Butoxyethylmethacrylat, 2-Ethoxyethylmethacrylat, Allyloxymethylmethacrylat,
1-Ethoxybutylmethacrylat, 1-Ethoxyethylmethacrylat, Ethoxymethylmethacrylat,
Poly(ethylenglycol)methylether(meth)acrylat,
Poly(propylenglycol)methylether(meth)acrylat;

Caprolacton- und/oder Valerolacton-modifizierte Hydroxyalkyl(meth)acrylate mit einem mittleren Molekulargewicht $M_n$ von 220 bis 1200, wobei die Hydroxy(meth)acrylate bevorzugt von geradkettigen, verzweigten oder cycloaliphatischen Diolen mit 2 bis 8 C-Atomen abgeleitet sind;

Aminoalkyl(meth)acrylate, wie zum Beispiel N,N-Dimethylaminoethyl(meth)acrylat, 2-Trimethylammoniumethylmethacrylatchlorid und N,N-Dimethylaminopropyl(meth)acrylat;

(Meth)acrylate von halogenierten Alkoholen, wie zum Beispiel Perfluoralkyl(meth)acrylate mit 6 bis 20 C-Atomen;

Oxiranyl(meth)acrylate, wie zum Beispiel 2,3-Epoxybutylmethacrylat, 3,4-Epoxybutylmethacrylat und Glycidyl(meth)acrylat;

Styrol und substituierte Styrole, wie zum Beispiel 4-Methylstyrol, 4-Vinylbenzoesäure und Natrium-4-vinylbenzolsulfonat;

Methacrylnitril und Acrylnitril;

ethylenisch ungesättigte Heterocyclen, wie zum Beispiel 4-Vinylpyridin und 1-[2-(Methacryloyloxy)-ethyl]-2-imidazolidinon;

Phosphorsäurehaltige Monomere, wie zum Beispiel
Tripropyleneglycolmethacrylatphosphat;

ethylenisch ungesättigte Sulfonsäuren und Sulfate sowie deren Salze, wie zum Beispiel Kalium[3-(methacryloyloxy)propyl]sulfonat,
Ammonium[2-(methacryloyloxy)ethyl]sulfat;

Vinylester von Carbonsäuren mit 1 bis 20 C-Atomen, wie zum Beispiel Vinylacetat;

Maleinimid, N-Phenylmaleinimid und N-substituierte Maleinimide mit geradkettigen, verzweigten oder cycloaliphatischen Alkylgruppen mit 1 bis 22 C-Atomen, wie zum Beispiel N-Ethylmaleinimid und N-Octylmaleinimid;

(Meth)acrylamid;

N-Alkyl- und N,N-Dialkylsubstituierte Acrylamide mit geradkettigen, verzweigten oder cycloaliphatischen Alkylgruppen mit 1 bis 22 C-Atomen, wie zum Beispiel N-(t-Butyl)acrylamid und N,N-Dimethylacrylamid;

Silyl-haltige (Meth)acrylate, wie zum Beispiel (Meth)acrylsäure(trimethylsilylester) und Methacrylsäure-[3-(trimethylsilyl)-propylester].

Zur Darstellung der Gradientenpolymere, die entlang der Polymerkette einem Übergang von hydrophilen zu hydrophoben Eigenschaften besitzen, können die Monomeren A oder die Monomeren B mit den weiteren Komponenten, die für die Durchführung der Polymerisation notwendig sind, wie zum Beispiel dem monofunktionellen Initiator und Katalysatoren oder Polymerisationsregler, vorgelegt und die respektive anderen Monomeren mit einer konstanten Dosierrate hinzudosiert werden. Beide, die Monomeren A und die Monomeren B können Mischungen verschiedener Monomeren sein und sie können zusätzlich Lösungsmittel enthalten. Katalysatoren für ATRP sind zum Beispiel Kupferchlorid- oder -bromidkomplexe stickstoffhaltiger Liganden wie 2,2'-Bipyridin oder N,N,N',N'',N''-Pentamethyldiethylentriamin, die auch *in situ* aus Kupfermetall, Ligand und Initiator erzeugt werden können. Weitere Katalysatoren sind in *Chem. Rev.* **2001,** *101,* 2921 aufgeführt.

Für GTP werden als Katalysatoren Fluoride, die in *US* 4659782 beschrieben werden, und Oxyanionen, die in *US 4588795* beschrieben werden, verwendet. Ein bevorzugter Katalysator für GTP ist Tetrabutylammonium-*m*-chlorobenzoat.

Für die Polymerisationstechniken 1) - 6), 8) und 10) sind Beispiele für die Polymerisationsregler in der zitierten Literatur aufgeführt; für NMP ist es zum Beispiel 2,2,6,6-Tetramethylpiperidinoxyl (TEMPO) oder N-*tert*-Butyl-N-[1-diethylphosphono-(2,2-dimethylpropyl)]nitroxyl; für die Polymerisationstechnologie 6 ist es 1,1-Diphenylethen, für RAFT sind es beispielsweise Thiocarbonsäureester oder Xanthogensäureester.

Ein anderes geeignetes Verfahren zur Darstellung der Gradientenpolymere, die entlang der Polymerkette einen Übergang von hydrophilen zu hydrophoben Eigenschaften besitzen, ist die getrennte Zuleitung der Monomeren A und Monomeren B mit unterschiedlichen Dosierraten in das Reaktionsgefäß, in dem sich Lösungsmittel und die weiten Komponenten, die für die Durchführung der Polymerisation notwendig sind, befinden. Auch hier können beide - die Monomeren A und die Monomeren B - Mischungen verschiedener Monomeren sein und sie können zusätzlich Lösungsmittel enthalten. Die Menge des Monomeren B beträgt bevorzugt 10 - 50 Gew% des Polymeren.

Die Dosierrate hängt von der Polymerisationsgeschwindigkeit ab. Sie soll bevorzugt so gewählt werden, dass bei Ende der Zugabe des zweiten Monomeren zum vorgelegten Monomeren bzw. bei Ende der Zugabe des Monomeren mit der langsameren Dosierrate sich das erste Monomer, das vorgelegt bzw. mit der schnelleren Dosierrate der Reaktion zugeleitet wurde, aufgebraucht ist.

Je nach Polymerisationsmethode sind geeignete, dem Durchschnittsfachmann bekannte Reaktionsbedingungen, Monomere und Lösungsmittel zu wählen.

Nach erfolgter Polymerisation können die Polymere nachträglich in polymeranalogen Reaktionen verändert werden um zum Beispiel Haftgruppen zu erzeugen.

Es ist möglich Säurefunktionen im Polymer wie zum Beispiel Carbonsäuren und Phosphorsäureester mit Basen umzusetzen.

Beispiele für Basen sind:

Amine wie zum Beispiel Dimethylaminoethanol, Diethanolamin, Triethanolamin, 2-(Dimethylamino)propan-1-ol, Triethylamin, Butylamin und Dibutylamin,
Hydroxide, Oxide, Carbonate und Hydrogencarbonate von Metallen der 1 - 3 Gruppe, wie zum Beispiel Natriumhydroxid, Kaliumhxdroxid, Aluminiumhydroxid und Natriumhydrogencarbonat;
und heterocyclische Stickstoffverbindungen wie zum Beispiel Imidazol.

Wie beispielsweise in *US 6111054* beschrieben, ist es auch möglich, die Versalzung von am Polymer gebundenen Aminen mit Carbonsäuren, Sulfonsäuren oder Phosphorsäuren und deren Estern vorzunehmen.

Weiterhin lassen sich Amine in Alkylierungsreaktionen zum Beispiel mit Benzylchlorid in quartäre Ammoniumsalze überführen. Tertiäre Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können. Oxiranstrukturen im Polymer lassen sich mit Nucleophilen wie 4-Nitrobenzoesäure, Aminen wie Ethanolamin oder Dibutylamin, oder Polyphosphorsäure umsetzen. Hydroxyfunktionalitäten im Polymer lassen sich mit Polyphosphorsäure zu Phosphorsäureester oder mit Lactonen wie zum Beispiel ε-Caprolacton zu Polyestern umsetzen.

Der Einsatz von Dispergiermittel auf der Basis von Gradientencopolymeren, die entlang der Polymerkette einen Übergang von hydrophilen zu hydrophoben Eigenschaften besitzen, kann gemäß dem Stand der Technik für bekannte Dispergiermittel erfolgen. Die Pigmentdispersionen mit diesen Dispergiermitteln können in einer Vielzahl von Anwendungen benutzt werden, zum Beispiel zur Dispergierung von Feststoffen in organischen Lösemitteln und/oder Wasser, gegebenenfalls in Gegenwart von Bindemitteln und lacküblichen Hilfsstoffen oder zur Dispergierung von Feststoffen in Schmelzen thermoplastischer Polymere.

So können diese beispielsweise bei der Herstellung von Pigment enthaltenden Überzugsmitteln wie z. B. Lacken, Pasten und/oder Formmassen eingesetzt werden.

Es lassen sich zum Beispiel diese Dispergiermittel zur Herstellung eines Pigmentlacks, wobei ein Lackbindemittel und/oder Lösungsmittel sowie Feststoffe, d. h. Pigmente und gegebenenfalls Füllstoffe und übliche Hilfsstoffe vermischt werden, verwenden. Lackbindemittel sind hier makromolekulare oder Makromoleküle bildende Stoffe, welche für die Filmbildung zuständig sind. Geeignet sind zum Beispiel 2-Komponenten-Reaktionslacke, lufttrocknende Lacke, feuchtigkeitshärtende Lacke, säurehärtende Lacke, strahlungshärtende Lacke, Dispersionslacke oder Einbrennlacke. Beispielhaft seien zu nennen Vinylesterharze, Alkydharze, Polyesterharze, Polyurethanharze, ungesättigte Polyesterharze, Polyester/Polyisocyanat-Kombinationen, Acrylharze, Epoxidharze, Epoxidharzester, Ethylen-Vinylacetat-Polymere, Melamin-Formaldehyd-Harze, Phenol-Formaldehyd-Harze, Polymethylmethacrylat, Polypropylen, Polyethylen, Polyamide, Polystyrol, Polyurethan, Polyvinylacetat, Polyvinylbutyrat, Polyvinylchlorid, Polyvinylidenchlorid, Polyvinylidenfluorid, Polyvinylfluorid, Chlorkautschuk, Cyclokautschuk, Silicon-Polymere, Harnstoff-Formaldehyd-Harze, Vinylchlorid-Vinylacetat-Polymere, Polybutadien, usw., sowie Mischungen der vorgenannten Substanzen. Weiterhin können in den Bindemitteln auch vernetzend wirkende Monomere mit wenigstens zwei nichtkonjugierten ethylenisch ungesättigten Doppelbindungen vorhanden sein. Beispiele hierfür sind Divinylbenzol, Alkylenglycoldi(meth)acrylate, wie Ethylenglycoldiacrylat, 1,3-Propylenglycoldiacrylat, 1,2-Propylenglycoldimethacrylat sowie Allyl(meth)acrylat, Diallylmaleat, Triallylcyanursäure oder Triallylisocyanursäure.

Gegenstand der Erfindung ist auch die Verwendung der beschriebenen Gradientencopolymere als Dispergiermittel bei der Herstellung von pigmentierten oder mit anderen Feststoffen gefüllten Formmassen und eines pigmentierten Überzuges auf einem Substrat, wobei der Pigmentlack auf das Substrat aufgebracht wird und wobei der auf das Substrat aufgebrachte Pigmentlack eingebrannt oder ausgehärtet bzw. vernetzt wird. Die Dispergiermittel können alleine oder zusammen mit nicht funktionsgebundenen Bindemitteln eingesetzt werden. Beim Einsatz in Polyolefinen kann es beispielsweise vorteilhaft sein, Wachse als Trägermaterial zusammen mit dem Dispergiermittel einzusetzen.

Eine erfindungsgemäße Verwendung der beschriebenen Gradientencopolymere als Dispergiermittel besteht auch in der Herstellung dispergierbarer Pigmente, die mit dem Dispergiermittel beschichtet sind. Derartige Beschichtungen der Pigmente werden in bekannter Weise durchgeführt, wie sie zum Beispiel in *EP-A-0270126* beschrieben werden.

Weitere Beispiele für die Verwendung von Pigmentdispersionen sind in *WO 00/40630*, Seite 3, Zeile 15 - 30 aufgeführt.

Die Dispergiermittel können zur Dispergierung von organischen Pigmenten, wie zum Beispiel Azo- und Diazokondensaten und deren Metallkomplexe, Phthalocyanine, Chinacridone, Indole, Thioindole, Perylene, Anthrachinone, Anthrapyrimidine, Diketopyrrolopyrrole und Carbazole eingesetzt werden. Weitere Beispiele für Pigmente finden sich in der Monographie: W. Herbst, K. Hunger "Industrial Organic Pigments", 1997, Wiley-VCH, ISBN: 3-527-28836-8.

Weiterhin lassen sich anorganische Pigmente und andere Feststoffe wie zum Beispiel Aluminium, Eisen(III) oxid, Chrom(III)oxid, Titandioxid, Zirkoniumdioxid, Zinkoxid, Zinksulfid, Zinkphosphat, Molybdänsulfid, Cadmiumsulfid, Ruß, Graphit, Bismutvanadat, Bleichromat, Bleimolybdat, Rutil, Calciumcarbonat, Magnesiumhydroxid, Glasfaser oder Silikate dispergieren.

Die Wahl der Monomeren B richtet sich nach dem zu dispergierenden Pigment oder Feststoff und kann von Fall zu Fall verschieden sein. Das gleiche gilt für die Wahl der Monomeren A, die auf das flüssige oder feste Medium abgestimmt sein sollen, zum Beispiel ist es vorteilhaft die Polarität der Monomere A an die Polarität der Bindemittel, Harze oder thermoplastischen Polymere sowie an die verwendeten Lösemittel anzupassen.

**Herstellbeispiele**

**Darstellung der Polymeren:**

Die dargestellten Polymere und die Mengenangaben sowie Dosierraten sind in den Tabellen 1 und 2 zusammengefasst.

Allgemeine Vorschrift zur Darstellung der Gradientenpolymeren **P1 - P15** mittels ATRP:

In einem mit Rührer, Thermometer, Rückflußkühler und Stickstoffeinleitungsrohr versehenen Glaskolben wurden unter $N_2$-Atmosphäre Monomer 1 und 2, Benzolsulfochlorid BSCI, 1 g 2,2'-Bipyridin und 400 mg Kupferpulver in 25 ml PMA (Methoxypropylacetat) auf 100 °C erhitzt. Bei Beginn der Reaktion wurde Monomer 3 in x g PMA mit einer konstanten Dosierrate x hinzugetropft. Nach Ende der Zuleitung des Monomeren 3 und einer Nachreaktionszeit von 5 min wurde die Reaktion durch Eintreten von Luft abgebrochen. Nach Verdünnen des Reaktionsansatzes mit 100 g PMA wurde über Kieselgel filtriert, um Verunreinigungen abzutrennen. Die flüchtigen Bestandteile wurden danach mittels Destillation entfernt. Das mittlere Molekulargewicht wurde durch Gel-Permeations-Chromatographie mit Polymethylmethacrylat als Vergleichsstandard bestimmt.

Allgemeine Vorschrift zur Darstellung der AB-Blockcopolymeren **P16 - P20** mittels ATRP:

In einem mit Rührer, Thermometer, Rückflußkühler und Stickstoffeinleitungsrohr versehenen Glaskolben wurden unter $N_2$-Atmosphäre Monomer 1, 3.3 ml BSCI, 1 g 2,2'-Bipyridin und 400 mg Kupferpulver in 25 ml PMA auf 100 °C erhitzt. Nach mindestens 98% Umsatz, welcher $^1$H-NMR-spektroskopisch bestimmt wurde, wurde Monomer 3 in 123 g PMA innerhalb von 1 min hinzugegeben und bis zu einem Umsatz von mindestens 98% polymerisiert. Die Reaktion wurde durch Eintreten von Luft abgebrochen. Nach Verdünnen des Reaktionsansatzes mit 100 g PMA wurde über Kieselgel filtriert, um Verunreinigungen abzutrennen. Die flüchtigen Bestandteile wurden danach mittels Destillation entfernt. Das mittlere Molekulargewicht wird durch Gel-Permeations-Chromatographie mit Polymethylmethacrylat als Vergleichsstandard bestimmt.

Darstellung des statistischen Copolymeren **P21**:

In einem mit Rührer, Thermometer, Rückflußkühler und Stickstoffeinleitungsrohr versehenen Glaskolben wurde unter $N_2$-Atmosphäre 148 g PMA bei 135 °C vorgelegt und eine Mischung aus Monomer 1, Monomer 3 und 3.4 g Trigonox C mit einer Dosierrate von 0.6 ml/min hinzugetropft. Nach Beendigung der Zugabe und weiterer 2 h bei 135°C wurden die flüchtigen Bestandteile mittels Destillation entfernt. Das zahlenmittlere Molekulargewicht wurde durch Gel-Permeations-Chromatographie mit Polymethylmethacrylat als Vergleichsstandard bestimmt.

**Darstellung der Dispergiermittel:**

Die dargestellten Dispergiermittel sind in Tabelle 3 aufgeführt.

Darstellung der Dispergiermittel **D1 - D9** aus den Polymeren **P1 - P7, P16** und **P21:** Jeweils 168 g der Polymere P1, P2, P5-7, P16 und P21,158 g von P3 bzw. 180 g von P4 wurden mit 52 g Benzylchlorid in 150 g PMA und 150 g Butylglycol (BG) bei 100°C 2 h zur Reaktion gebracht und anschließend mit einem Gemisch PMA, Butylglycol 1:1 auf einen Festkörpergehalt von 40% verdünnt.

Darstellung der Dispergiermittel **D10 - D14** aus den Polymeren **P1, P2, P15, P16** und **P20:** Das Polymer **P** wurde mit PMA auf einen Festkörpergehalt von 40% verdünnt.

Darstellung der Dispergiermittel **D15 - D17** aus den Polymeren **P8, P9** und **P17**: Das Polymer **P** wurde mit einem fünffachen molaren Überschuß an 32%iger, wässriger Salzsäure relativ zu der Anzahl der t-Butylgruppen im Polymer und 200 ml Dioxan 4 h bei 90°C zur Reaktion gebracht. Das Polymer wurde in Wasser ausgefällt, getrocknet und mit einer Mischung von Wasser, Butylgycol 1:1 und 16g Triethanolamin auf einen Festkörpergehalt von 40% angelöst.

Darstellung der Dispergiermittel **D18 - D20** aus den Polymeren **P10, P11** und P18:

Das Polymer **P** wurde mit 55 g 4-Nitrobenzoesäure und 1 g Ethyltriphenylphosphoniumiodid in 250 g PMA bei 110°C 8 h zur Reaktion gebracht und anschließend auf einen Festkörpergehalt von 40% eingestellt.

Darstellung der Dispergiermittel **D21 - D24** aus den Polymeren **P12 - P14** und **P19:**

Zu dem Polymer **P** in 200 g PMA wurde 33 g Polyphosphorsäure bzw. 66 g Polyphosphorsäure für P14 portionsweise bei 50°C hinzugegeben und 3 h bei 80°C zur Reaktion gebracht. Anschließend wurden die Lösungen auf einen Festkörpergehalt von 40% eingestellt.

**Tabelle 1** Dargestellte Gradientencopolymere mittels ATRP

| Polymer | BSCI | Monomer 1 | | Monomer 2 | | Monomer 3 | | PMA | Dosierrate | $M_n$ | $M_w/M_n$ |
|---|---|---|---|---|---|---|---|---|---|---|---|
| P1 | 3.3 ml | BMA | 103 g | - | - | DMAEMA | 65 g | 123 g | 0.8 ml/min | 6700 | 1.35 |
| P2 | 3.3 ml | BMA | 103 g | - | - | DMAEMA | 65 g | 123 g | 1.6 ml/min | 9210 | 1.27 |
| P3 | 3.3 ml | BMA | 71 g | MMA | 22 g | DMAEMA | 65 g | 123 g | 1.6 ml/min | 6440 | 1.26 |
| P4 | 3.3 ml | BMA | 71 g | EHMA | 44 g | DMAEMA | 65 g | 123 g | 0.8 ml/min | 7400 | 1.28 |
| P5 | 6.6 ml | BMA | 103 g | - | - | DMAEMA | 65 g | 123 g | 1.6 ml/min | 3240 | 1.34 |
| P6 | 3.3 ml | BMA | 206 g | - | - | DMAEMA | 130 g | 246 g | 1.6 ml/min | 14230 | 1.27 |
| P7 | 3.3 ml | BMA | 309 g | - | - | DMAEMA | 195 g | 369 g | 1.6 ml/min | 20540 | 1.26 |
| P8 | 3.3 ml | BMA | 103 g | - | - | t-BMA | 60 g | 123 g | 0.8 ml/min | 6910 | 1.29 |
| P9 | 3.3 ml | BMA | 103 g | - | - | t-BMA | 60 g | 123 g | 1.6 ml/min | 6890 | 1.26 |
| P10 | 3.3 ml | BMA | 103 g | - | - | GMA | 59 g | 123 g | 0.8 ml/min | 6960 | 1.34 |
| P11 | 3.3 ml | BMA | 103 g | - | - | GMA | 59 g | 123 g | 1.6 ml/min | 7290 | 1.38 |
| P12 | 3.3 ml | BMA | 103 g | - | - | HEMA | 54 g | 123 g | 0.8 ml/min | 6780 | 1.30 |
| P13 | 3.3 ml | BMA | 103 g | - | - | HEMA | 54 g | 123 g | 1.6 ml/min | 6970 | 1.28 |
| P14 | 3.3 ml | BMA | 206 g | - | - | HEMA | 108 g | 246 g | 1.6 ml/min | 12450 | 1.29 |
| P15 | 3.3 ml | BMA | 103 g | - | - | MIMI | 82 g | 123 g | 1.6 ml/min | 6720 | 1.25 |

BSCI = Benzolsulfochlorid, BMA = n-Butylmethacrylat, MMA = Methylmethacrylat, EHMA = 2-Ethylhexylmethacrylat, DMAEMA = N,N-Dimethylaminoethylmethacrylat, t-BMA = t-Butylmethacrylat, GMA = Glycidylmethacrylat, HEMA = 2-Hydroxymethacrylat, MIMI = 1-[2-(Methacryloyloxy)-ethyl]-2-imidazolidinon

EP 1 416 019 B1

EP 1 416 019 B1

**Tabelle 2**  Dargestellte Blockcopolymere und das statistische Copolymer **P21**

| Polymer | BSCl | Monomer 1 | | Monomer 2 | Monomer 3 | | $M_n$ | $M_w/M_n$ |
|---|---|---|---|---|---|---|---|---|
| **P16** | 3.3 ml | BMA | 103 g | | DMAEMA | 65 g | 6781 | 1.26 |
| **P17** | 3.3 ml | BMA | 103 g | | t-BMA | 60 g | 7590 | 1.32 |
| **P18** | 3.3 ml | BMA | 103 g | | GMA | 59 g | 7130 | 1.27 |
| **P19** | 3.3 ml | BMA | 103 g | | HEMA | 54 g | 7030 | 1.27 |
| **P20** | 3.3 ml | BMA | 103 g | | MIMI | 82 g | 5560 | 1.50 |
| **P21** | | BMA | 103 g | | DMAEMA | 65 g | 9200 | 2.49 |

Tabelle 3    Umsetzungsprodukte oder Anlösungen der Polymere P1 - P21

| Dispergiermittel | Polymer | Polymerstruktur | Umsetzung | Lösungsmittel |
|---|---|---|---|---|
| D1 | P21 | Statistisches Copolymer | mit Benzylchlorid | PMA / BG, 50:50 |
| D2 | P16 | Blockcopolymer | mit Benzylchlorid | PMA / BG, 50:50 |
| D3 | P1 | Gradientencopolymer | mit Benzylchlorid | PMA / BG, 50:50 |
| D4 | P2 | Gradientencopolymer | mit Benzylchlorid | PMA / BG, 50:50 |
| D5 | P3 | Gradientencopolymer | mit Benzylchlorid | PMA / BG, 50:50 |
| D6 | P4 | Gradientencopolymer | mit Benzylchlorid | PMA / BG, 50:50 |
| D7 | P5 | Gradientencopolymer | mit Benzylchlorid | PMA / BG, 50:50 |
| D8 | P6 | Gradientencopolymer | mit Benzylchlorid | PMA / BG, 50:50 |
| D9 | P7 | Gradientencopolymer | mit Benzylchlorid | PMA / BG, 50:50 |
| D10 | P16 | Blockcopolymer | | PMA |
| D11 | P1 | Gradientencopolymer | | PMA |
| D12 | P2 | Gradientencopolymer | | PMA |
| D13 | P20 | Blockcopolymer | | PMA |
| D14 | P15 | Gradientencopolymer | | PMA |
| D15 | P17 | Blockcopolymer | sauer hydrolysiert | BG / Wasser, 50:50 |
| D16 | P8 | Gradientencopolymer | sauer hydrolysiert | BG / Wasser, 50:50 |
| D17 | P9 | Gradientencopolymer | sauer hydrolysiert | BG / Wasser, 50:50 |
| D18 | P18 | Blockcopolymer | mit p-Nitrobenzoesäure | PMA |
| D19 | P10 | Gradientencopolymer | mit p-Nitrobenzoesäure | PMA |
| D20 | P11 | Gradientencopolymer | mit p-Nitrobenzoesäure | PMA |
| D21 | P19 | Blockcopolymer | mit Polyphosphorsäure | PMA |
| D22 | P12 | Gradientencopolymer | mit Polyphosphorsäure | PMA |
| D23 | P13 | Gradientencopolymer | mit Polyphosphorsäure | PMA |
| D24 | P14 | Gradientencopolymer | mit Polyphosphorsäure | PMA |

**Auflackungen mit den Dispergiermitteln:**

Durchführung des Schaumtests:
40g Lack wurden 1min bei 1895 U/min mittels eines Dissolvers der Firma Pendraulik aufgeschäumt und sofort aufgegossen. Nach Trocknung wurde die Beurteilung des Schaums mit folgender Wertung vorgenommen:
1- 5 (1 = kein Schaum; 5 = viel Schaum)

Der Glanz und Haze wurden mit dem Meßgerät "haze-gloss" der Firma Byk Gardner bestimmt. Die Transparenz und die Stippenbildung wurden visuell beurteilt. Hierbei wurde eine Skala von 1-5 verwendet (1 = keine Stippen bzw. transparent; 5 = viele Stippen bzw. nicht transparent).

**D1 - D9, D13** und **D14:** Gasruss FW 200, saure Rußtype, Hersteller: Degussa

| Mahlpaste: | |
| --- | --- |
| Dynapol H703 (65% in Xylol) | 49,00 g |
| Dispergiermittel **D** | 14,00 g |
| Pigment | 8,00 g |
| Butylacetat | 29.00 g |
| | 100,00 g |

Dispergierung: 60 min bei 40°C und 10000 U/min, Dispermat CV

| Auflackmaterial: | |
| --- | --- |
| Dynapol H703 (65% in Xylol) | 34,70 g |
| CAB 381-2 (15% in Butylacetat / Xylol 2:1) | 42,60 g |
| Maprenal MF 650 (55 % in *iso*-Butanol) | 20,90 g |
| BYK 306 | 1,80 g |
| | 100,00 g |

| Auflackung: | |
| --- | --- |
| Mahlpaste | 13,20 g |
| Auflackmaterial | 36,30 g |
| Butylacetat | 50,50 g |
| | 100,00 g |

10 min rütteln

Trocknung: 10 min bei Raumtemperatur, dann 30 min bei 140°C

| Beurteilung des Lackfilms: | | | | | |
| --- | --- | --- | --- | --- | --- |
| | Glanz R20 | Haze | Transparenz | Stippen | Schaum |
| **D1** | 26 | 465 | 5 | nein | 2 |
| **D2** | 93 | 39 | 2 | ja | 5 |
| **D3** | 90 | 42 | 1 | nein | 3-4 |
| **D4** | 88 | 29 | 1 | nein | 3-4 |
| **D5** | 88 | 24 | 1 | nein | 3-4 |
| **D6** | 102 | 32 | 2 | nein | 3-4 |
| **D7** | 89 | 29 | 1 | nein | 3-4 |
| **D8** | 86 | 34 | 1 | nein | 3-4 |
| **D9** | 87 | 35 | 2 | nein | 3-4 |
| **D13** | 47 | 349 | 1 | nein | 4 |
| **D14** | 90 | 34 | 1 | nein | 3 |

**D10 - D12**: Irgazin DPProtBO, Hersteller: Ciba Speciality Chemicals

| Mahlpaste: | |
|---|---|
| Paraloid DM 55 (60% in Xylol / PMA 1:1) | 30,00 g |
| PMA | 16,40 g |
| Dispergiermittel **D** | 20,60 g |
| Pigment | 33,00 g |
| | 100,00 g |

Dispergierung: 45 min bei 40°C und 10000 U/min, Dispermat CV

| Auflackmaterial: | |
|---|---|
| Polymac 57-5776 (85% in PMA) | 61,00 g |
| Cymel 303 | 17,40 g |
| PMA | 8,10 g |
| Butanol | 2,80 g |
| 2-Butanon | 2,60 g |
| Xylol | 4,60 g |
| Byk Cat 450 | 3,50 g |
| | 100,00 g |

Auflackung:

30,3g Paste und 69,3g Auflackmaterial;

10 min rütteln

Trocknung: 10 min bei Raumtemperatur, dann 30 min bei 140°C

| Beurteilung des Lackfilms: | | | | | |
|---|---|---|---|---|---|
| | Glanz R20 | Haze | Transparenz [*] | Stippen | Schaum |
| **D10** | 31 | 318 | | nein | 3 |
| **D11** | 46 | 285 | | nein | 3 |
| **D12** | 37 | 311 | | nein | 3 |

[*] deckendes Pigment, keine Transparenzmessung möglich

**D15** und **D16**: Sicotransrot L2817, Hersteller: BASF

| Mahlpaste: | |
|---|---|
| PEG 200 | 16,00 g |
| $H_2O$ dest. | 38,10 g |
| Dispergiermittel **D** | 15,00 g |
| Byk 024 | 0,40 g |
| Byk 019 | 0,50 g |
| Pigment | 30,00 g |
| | 100,00 g |

Dispergierung: 45 min. bei 40°C und 10000 U/min, Dispermat CV

| Auflackmaterial: | |
|---|---|
| Neocryl XK 97 (42,5% in Wasser) | 95,00 g |
| Ammoniak (pH-Wert auf pH 9 einstellen) | |
| Butyldiglykol | 2,30 g |
| Acrysol RM 8 | 0,50 g |

(fortgesetzt)

| Auflackmaterial: | |
|---|---|
| Borchigel L 75 N (50% in Wasser) | 1,00 g |
| Byk 028 | 1,00g |
| Byk 346 | 0,20 g |
| | $\overline{100,00 \text{ g}}$ |

Auflackung:

26,30 g Paste und 73,70 g Lack;

10 min rütteln

Trocknung: bei Raumtemperatur

| Beurteilung des Lackfilms: | | | | | |
|---|---|---|---|---|---|
| | Glanz R20 | Haze | Transparenz | Stippen | Schaumhöhe[*] |
| **D15** | 6 | 246 | 4 | ja | 1,5cm |
| **D16** | 13 | 207 | 4 | nein | 1,0cm |

[*] 3g Lack in 20g Wasser aufgeschüttelt; Beurteilung der Schaumhöhe nach 1 h.

**D18 - D20**: Printex 200, basische Rußtype, Hersteller Degussa

| Mahlpaste: | |
|---|---|
| Dynapol H703 (65% in Xylol) | 49,00 g |
| Dispergiermittel **D** | 14,00 g |
| Pigment | 8,00 g |
| Butylacetat | 29,00 g |
| | $\overline{100,00\text{g}}$ |

Dispergierung: 60 min. bei 40°C und 10000 U/min, Dispermat CV

| Auflackmaterial: | |
|---|---|
| Dynapol H703 (65% in Xylol) | 34,70 g |
| CAB 381-2 (15% in Butylacetat / Xylol 2:1) | 42,60 g |
| Maprenal MF 650 (55 % in 2-Butanol) | 20,90 g |
| BYK 306 | 1,80 g |
| | $\overline{100,00 \text{ g}}$ |

| Auflackung: | |
|---|---|
| Mahlpaste | 13,20g |
| Auflackmaterial | 36,30 g |
| Butylacetat | 50,50 g |
| | $\overline{100,00 \text{ g}}$ |

10 min rütteln

Trocknung: 10 min bei Raumtemperatur, dann 30 min bei 140°C

| Beurteilung des Lackfilms: | | | | | |
|---|---|---|---|---|---|
| | Glanz R20 | Haze | Transparenz | Stippen | Schaum |
| D18 | 34 | 453 | 4 | nein | 5 |

(fortgesetzt)

| Beurteilung des Lackfilms: | | | | | |
|---|---|---|---|---|---|
| | Glanz R20 | Haze | Transparenz | Stippen | Schaum |
| D19 | 45 | 402 | 4 | nein | 1 |
| D20 | 50 | 390 | 4 | nein | 1 |
| Beurteilung des Schaumverhaltens der Mahlpaste | | | | | |

**D21 - D24**: Sicotransrot L2817, Hersteller: BASF

| Mahlpaste: | |
|---|---|
| Paraloid DM 55 (60% in Xylol / PMA 1:1) | 33,00 g |
| PMA | 18,25 g |
| Dispergiermittel D | 18,75 g |
| Pigment | 30,00 g |
| | 100,00 g |

Dispergierung: 45 min bei 40°C und 10000 U/min, Dispermat CV

| Auflackmaterial: | |
|---|---|
| Polymac 57-5776 (85% in PMA) | 61,00 g |
| Cyrnel 303 | 17,40 g |
| PMA | 8,10 g |
| Butanol | 2,80 g |
| 2-Butanon | 2,60 g |
| Xylol | 4,60 g |
| Byk Cat 450 | 3,50 g |
| | 100,00 g |

Auflackung:
12g Paste und 88g Lack;
10 min rütteln
Trocknung: 10 min bei Raumtemperatur, dann 30 min bei 140°C

| Beurteilung des Lackfilms: | | | | | |
|---|---|---|---|---|---|
| | Glanz R20 | Haze | Transparenz | Stippen | Schaum |
| **D21** | 29 | 535 | 5 | nein | 5 |
| **D22** | 85 | 97 | 2 | nein | 1 |
| **D23** | 89 | 65 | 2 | nein | 1 |
| **D24** | 88 | 70 | 2 | nein | 1 |

| | |
|---|---|
| Dynapol H703: | gesättigter Polyester, Bindemittel, Degussa |
| Maprenal MF 650: | Melaminharz, Bindemittel, Vianova |
| Paraloid DM 55: | Polymethacrylat, Biondemittel, Rohm und Haas |
| Polymac 57-5776: | Polyester, Bindemittel, Mc Whorter |
| Neocryl XK-97: | Polymethacrylat, Bindemittel, Neo-Resins |
| Byk Cat 450: | Katalysator, Byk-Chemie |
| Byk 019: | Entschäumer, Byk-Chemie |
| Byk 024: | Entschäumer, Byk-Chemie |
| Byk 028: | Entschäumer, Byk-Chemie |

| Byk 306: | Verlaufadditiv, Byk-Chemie |
|---|---|
| Byk 346: | Silikontensid, Byk-Chemie |
| Acrysol RM 8: | Verdicker, Rohm und Haas |
| Borchigel L75N: | Verdicker, Borchers |
| Cymel 303: | Melaminharz, Bindemittel, Cytec |
| PEG: | Polyethylenglycol |
| CAB: | Celluloseacetobutyrat |

**Patentansprüche**

1. Verwendung von Gradientencopolymeren als Dispergiermittel, wobei die Gradientencopolymere durch lebende, kontrollierte Polymerisation von ethylenisch ungesättigten Monomeren unter Verwendung eines monofunktionellen Initiators, der kein Polymer ist, und wobei die Gradientencopolymere entlang der Polymerkette einen Übergang von hydrophilen zu hydrophoben Eigenschaften besitzen, erhältlich sind, in dem

   a) ein Monomer (I) kontinuierlich zu einem Monomer (II) unter Reaktion zugeleitet wird oder
   b) ein Monomer (I) und ein Monomer (II) mit unterschiedlichen Dosierraten kontinuierlich einem Reaktionsbehälter zur Reaktion zugeleitet werden,

   wobei entweder durch das Monomer (I) oder durch das Monomer (II) Gruppen in das Gradientencopolymer eingeführt werden, die als solche oder nach weiterer chemischer Umsetzung des Gradientencopolymers in Wechselwirkung mit dem zu dispergierenden Feststoff oder den zu dispergierenden Feststoffen treten und durch das andere Monomer Gruppen in das Gradientencopolymer eingeführt werden, die mit dem flüssigen oder festen Dispersionsmedium verträglich sind, wobei entweder das Monomer (I), oder die Produkte aus der weiteren chemischen Umsetzung des Monomeren (I) einerseits, oder das Monomer (II), oder die Produkte der weiteren chemischen Umsetzung des Monomers (II) andererseits hydrophobe Eigenschaften besitzen und das jeweilige andere Monomer oder die Produkte der weiteren chemischen Umsetzung des jeweiligen anderen Monomers hydrophile Eigenschaften besitzen, wobei die Eigenschaften hydrophob und hydrophil folgendermaßen definiert sind: hydrophile Eigenschaften liegen bei einem Löslichkeitsparameter größer oder gleich 22 $J^{1/2}/cm^{3/2}$ und hydrophobe Eigenschaften liegen bei einem Löslichkeitsparameter kleiner 22 $J^{1/2}/cm^{3/2}$ vor, und wobei die Begriffe "Monomer (I)" und "Monomer (II)" auch Mischungen aus Monomeren (I) einerseits und Monomeren (II) andererseits umfassen.

2. Verwendung von Gradientencopolymeren als Dispergiermittel gemäß Anspruch 1, wobei die lebende, kontrollierte Polymerisation die "Atom Transfer Radical Polymerization" ist.

3. Verwendung von Gradientencopolymeren als Dispergiermittel gemäß Anspruch 1, wobei die lebende, kontrollierte Polymerisation die "Group Transfer Polymerization" ist.

4. Verwendung von Gradientencopolymeren als Dispergiermittel gemäß Anspruch 1, wobei die lebende, kontrollierte Polymerisation eine RAFT-Polymerisation ist.

5. Verwendung von Gradientencopolymeren als Dispergiermittel gemäß Anspruch 1, wobei die lebende, kontrollierte Polymerisation mit 1,1-Diphenylethen durchgeführt wird.

6. Verwendung von Gradientencopolymeren als Dispergiermittel gemäß Anspruch 1, wobei die lebende, kontrollierte Polymerisation mit Nitroxylverbindungen (NMP) durchgeführt wird.

7. Verwendung von Gradientencopolymeren als Dispergiermittel gemäß Anspruch 1, wobei die lebende, kontrollierte Polymerisätion mit Organokolbaltkomplexen durchgeführt wird.

8. Verwendung von Gradientencopolymeren als Dispergiermittel gemäß einem der Ansprüche 1 - 7, wobei die Gradientencopolymere ein mittleres zahlengewichtetes Molekulargewicht $M_n$ von 2 000 bis 20 000 g/mol besitzen.

9. Verwendung von Gradientencopolymeren gemäß einem der Ansprüche 1 - 8, wobei die Monomere, die in Wechselwirkung mit dem zu dispergierenden Feststoff oder den zu dispergierenden Feststoffen treten, ausgewählt sind aus der Gruppe bestehend aus Aminoalkyl(meth)acrylaten, deren Aminfunktionalität entweder mit Säuren versalzt oder mit Alkylierungsmitteln zu quartären Ammoniumgruppen umgesetzt wurde, und 1-[2-(Methacryloyloxy)-ethyl]-2-imidazolidinon.

10. Verwendung von Gradientencopolymeren als Dispergiermittel gemäß einem oder mehreren der Ansprüche 1 - 9 zur Dispergierung von Feststoffen in organischen Lösemitteln und/oder Wasser, gegebenenfalls in Gegenwart von Bindemitteln und lacküblichen Hilfsstoffen.

11. Verwendung von Gradientencopolymeren als Dispergiermittel gemäß Anspruch 10, wobei die Feststoffe Pigmente und/oder Füllstoffe sind.

12. Verwendung von Gradientencopolymeren als Dispergiermittel gemäß einem oder mehreren der Ansprüche 1 - 9 zur Herstellung eines Überzugsmittels, wobei ein Bindemittel, ein oder mehrere organische Lösemittel und/oder Wasser, Pigmente und/oder Füllstoffe, das Dispergiermittel und gegebenenfalls weitere übliche Hilfsstoffe zusammen dispergiert werden.

13. Verwendung von Gradientencopolymeren als Dispergiermittel gemäß einem oder mehreren der Ansprüchen 1 - 12, wobei die zu dispergierenden Feststoffe mit den Gradientencopolymeren überzogen sind.

14. Überzugsmittel, Pasten und/oder Formmassen enthaltend Gradientencopolymere als Dispergiermittel, wobei die Gradientencopolymere Gradientencopolymere durch lebende, kontrollierte Polymerisation von ethylenisch ungesättigten Monomeren unter Verwendung eines monofunktionellen Initiators, der kein Polymer ist, und wobei die Gradientencopolymere entlang der Polymerkette einen Übergang von hydrophilen zu hydrophoben Eigenschaften besitzen, erhältlich sind, in dem

    a) ein Monomer (I) kontinuierlich zu einem Monomer (II) unter Reaktion zugeleitet wird oder
    b) ein Monomer (I) und ein Monomer (II) mit unterschiedlichen Dosierraten kontinuierlich einem Reaktionsbehälter zur Reaktion zugeleitet werden,

wobei entweder durch das Monomer (I) oder durch das Monomer (II) Gruppen in das Gradientencopolymer eingeführt werden, die als solche oder nach weiterer chemischer Umsetzung des Gradientencopolymers in Wechselwirkung mit dem zu dispergierenden Feststoff oder den zu dispergierenden Feststoffen treten und durch das andere Monomer Gruppen in das Gradientencopolymer eingeführt werden, die mit dem flüssigen oder festen Dispersionsmedium verträglich sind, wobei entweder das Monomer (I), oder die Produkte aus der weiteren chemischen Umsetzung des Monomeren (I) einerseits, oder das Monomer (II), oder die Produkte der weiteren chemischen Umsetzung des Monomers (II) andererseits hydrophobe Eigenschaften besitzen und das jeweilige andere Monomer oder die Produkte der weiteren chemischen Umsetzung des jeweiligen anderen Monomers hydrophile Eigenschaften besitzen, wobei die Eigenschaften hydrophob und hydrophil folgendermaßen definiert sind: hydrophile Eigenschaften liegen bei einem Löslichkeitsparameter größer oder gleich 22 $J^{1/2}/cm^{3/2}$ und hydrophobe Eigenschaften liegen bei einem Löslichkeitsparameter kleiner 22 $J^{1/2}/cm^{3/2}$ vor, und wobei die Begriffe "Monomer (I)" und "Monomer (II)" auch Mischungen aus Monomeren (I) einerseits und Monomeren (II) andererseits umfassen.

15. Überzugsmittel, Pasten und/oder Formmassen gemäß Anspruch 14, wobei die Gradientencopolymere ein mittleres zahlengewichtetes Molekulargewicht $M_n$ von 2 000 bis 20 000 g/mol besitzen.

16. Überzugsmittel, Pasten und/oder Formmassen gemäß einem oder mehreren der Ansprüche 14 oder 15, wobei diese einen oder mehrere Feststoffe, organische Lösemittel und/oder Wasser, gegebenenfalls in Gegenwart von Bindemitteln und lacküblichen Hilfsstoffen enthalten.

17. Überzugsmittel, Pasten und/oder Formmassen gemäß Anspruch 16, wobei der oder die Feststoffe, Pigmente und/oder Füllstoffe sind.

18. Überzugsmittel, Pasten und/oder Formmassen gemäß Anspruch 16 oder 17, wobei der oder die Feststoffe mit dem Gradientencopolymer überzogen sind.

**EP 1 416 019 B1**

**Claims**

1. Use of gradient copolymers as dispersants, wherein the gradient copolymers are obtainable by the living, controlled polymerization of ethylenically unsaturated monomers using a monofunctional initiator that is not a polymer, and the gradient copolymers undergo a transition from hydrophilic to hydrophobic properties along the polymer chain, in which

   a) a monomer (I) is introduced continuously into a monomer (II) as the reaction proceeds, or
   b) a monomer (I) and a monomer (II) are introduced continuously into a reaction vessel at different metering rates in order to react,

   there being introduced into the gradient copolymer, either through monomer (I) or through monomer (II), groups that interact, as such or after further chemical reaction of the gradient copolymer, with the solid(s) to be dispersed, and

   there being introduced into the gradient copolymer, through the other monomer, groups that are compatible with the liquid or solid dispersion medium, where on the one hand either monomer (I) or the products of the further chemical reaction of monomer (I), or on the other hand either monomer (II) or the products of the further chemical reaction of monomer (II), have hydrophobic properties and the other monomer or the products of the further chemical reaction of the other monomer have hydrophilic properties, hydrophobic and hydrophilic properties being defined as follows: hydrophilic properties are present when the solubility parameter is greater than or equal to 22 $J^{1/2}/cm^{3/2}$ and hydrophobic properties are present when the solubility parameter is less than 22 $J^{1/2}/cm^{3/2}$, the terms "monomer (I)" and "monomer (II)" also including mixtures of monomers (I) and monomers (II), respectively.

2. Use of gradient copolymers as dispersants according to Claim 1 wherein the living, controlled polymerization is atom transfer radical polymerization.

3. Use of gradient copolymers as dispersants according to Claim 1 wherein the living, controlled polymerization is group transfer polymerization.

4. Use of gradient copolymers as dispersants according to Claim 1 wherein the living, controlled polymerization is a RAFT polymerization.

5. Use of gradient copolymers as dispersants according to Claim 1 wherein the living, controlled polymerization is carried out with 1,1-diphenylethene.

6. Use of gradient copolymers as dispersants according to Claim 1 wherein the living, controlled polymerization is carried out with nitroxyl compounds (NMP).

7. Use of gradient copolymers as dispersants according to Claim 1 wherein the living, controlled polymerization is carried out with organocobalt complexes.

8. Use of gradient copolymers as dispersants according to one of Claims 1 - 7 wherein the gradient copolymers have a number-average molecular weight $M_n$ of 2000 to 20,000 g/mol.

9. Use of gradient copolymers according to one of Claims 1 - 8 wherein the monomers that interact with the solid(s) to be dispersed are selected from the group comprising aminoalkyl (meth)acrylates whose amino functionality has either been salified with acids or converted to quaternary ammonium groups with alkylating agents, and 1-[2-(methacryloyloxy)ethyl]-2-imidazolidinone.

10. Use of gradient copolymers as dispersants according to one or more of Claims 1 - 9 for dispersing solids in organic solvents and/or water, optionally in the presence of binders and auxiliary substances conventionally used in lacquers.

11. Use of gradient copolymers as dispersants according to Claim 10 wherein the solids are pigments and/or fillers.

12. Use of gradient copolymers as dispersants according to one or more of Claims 1 - 9 for preparing a coating agent, wherein a binder, one or more organic solvents and/or water, pigments and/or fillers, the dispersant and optionally

**19**

other conventional auxiliary substances are dispersed together.

13. Use of gradient copolymers as dispersants according to one or more of Claims 1 - 12 wherein the solids to be dispersed are coated with the gradient copolymers.

14. Coating agents, pastes and/or moulding compounds containing gradient copolymers as dispersants, wherein the gradient copolymers are obtainable by the living, controlled polymerization of ethylenically unsaturated monomers using a monofunctional initiator that is not a polymer, and the gradient copolymers undergo a transition from hydrophilic to hydrophobic properties along the polymer chain, in which

    a) a monomer (I) is introduced continuously into a monomer (II) as the reaction proceeds, or
    b) a monomer (I) and a monomer (II) are introduced continuously into a reaction vessel at different metering rates in order to react,

there being introduced into the gradient copolymer, either through monomer (I) or through monomer (II), groups that interact, as such or after further chemical reaction of the gradient copolymer, with the solid(s) to be dispersed, and

there being introduced into the gradient copolymer, through the other monomer, groups that are compatible with the liquid or solid dispersion medium, where on the one hand either monomer (I) or the products of the further chemical reaction of monomer (I), or on the other hand either monomer (II) or the products of the further chemical reaction of monomer (II), have hydrophobic properties and the other monomer or the products of the further chemical reaction of the other monomer have hydrophilic properties, hydrophobic and hydrophilic properties being defined as follows: hydrophilic properties are present when the solubility parameter is greater than or equal to 22 $J^{1/2}/cm^{3/2}$ and hydrophobic properties are present when the solubility parameter is less than 22 $J^{1/2}/cm^{3/2}$,

the terms "monomer (I)" and "monomer (II)" also including mixtures of monomers (I) and monomers (II), respectively.

15. Coating agents, pastes and/or moulding compounds according to Claim 14 wherein the gradient copolymers have a number-average molecular weight $M_n$ of 2000 to 20,000 g/mol.

16. Coating agents, pastes and/or moulding compounds according to one or both of Claims 14 and 15 which contain one or more solids, organic solvents and/or water, optionally in the presence of binders and auxiliary substances conventionally used in lacquers.

17. Coating agents, pastes and/or moulding compounds according to Claim 16 wherein the solid(s) is (are) pigments and/or fillers.

18. Coating agents, pastes and/or moulding compounds according to Claim 16 or 17 wherein the solid(s) is (are) coated with the gradient copolymer.

**Revendications**

1. utilisation de copolymères à gradient comme agents de dispersion, les copolymères à gradient pouvant être obtenus par polymérisation "vivante" (anionique) contrôlée de monomères éthyléniquement insaturés par recours à un initiateur monofonctionnel qui n'est pas un polymère, les copolymères à gradient possédant le long de la chaîne polymère une transition de propriétés hydrophiles à propriétés hydrophobes, dans laquelle :

    a) un monomère (I) est apporté en continu à un monomère (II) et réagit avec lui ou
    b) un monomère (I) et un monomère (II) sont apportés en continu à différentes vitesses de dosage dans un récipient de réaction pour les faire réagir,

    des groupes qui en tant que tels ou après une autre conversion chimique du polymère à gradient interagissent avec le solide à disperser ou avec les solides à disperser sont insérés dans le copolymère à gradient soit par le monomère (I) soit par le monomère (II) et
    des groupes qui sont compatibles avec le milieu liquide ou solide de dispersion sont insérés dans le copolymère à gradient par l'intermédiaire de l'autre monomère,
    soit le monomère (I) soit les produits de l'autre conversion chimique du monomère (I), d'une part, soit le monomère (II) ou les produits de l'autre conversion chimique du monomère (II), d'autre part, possédant des propriétés hydrophobes, et l'autre monomère ou les produits de l'autre conversion chimique de l'autre monomère possédant des propriétés hydrophiles, les propriétés d'hydrophobicité et d'hydrophilicité étant définies de la façon suivante : des propriétés hydrophiles prédominent lorsque le paramètre de solubilité est supérieur ou égal à 22 $J^{1/2}/cm^{3/2}$ et des propriétés hydrophobes prédominent lorsque le paramètre de solubilité est inférieur à $22J^{1/2}/cm^{3/2}$,

les termes de "monomère (I)" et "monomère (II)" comprenant également des mélanges de monomère (I), d'une part, et de monomère (II), d'autre part.

2. Utilisation de copolymères à gradient comme agents de dispersion selon la revendication 1, la polymérisation vivante contrôlée étant une "polymérisation radicalaire par transfert d'atomes".

3. utilisation de copolymères à gradient comme agents de dispersion selon la revendication 1, la polymérisation contrôlée vivante étant une "polymérisation par transfert de groupes".

4. utilisation de copolymères à gradient comme agent de dispersion selon la revendication 1, dans laquelle la polymérisation vivante contrôlée est une polymérisation RAFT.

5. Utilisation de copolymères à gradient comme agent de dispersion selon la revendication 1, dans laquelle la polymérisation vivante contrôlée est réalisée avec le 1,1-diphényléthyne.

6. utilisation de copolymères à gradient comme agents de dispersion selon la revendication 1, dans laquelle la polymérisation vivante contrôlée est réalisée avec des composés nitroxyle (NMP).

7. utilisation de copolymères à gradient comme agents de dispersion selon la revendication 1, dans laquelle la polymérisation vivante contrôlée est réalisée avec des complexes organiques du cobalt.

8. utilisation de copolymères à gradient comme agents de dispersion selon l'une des revendications 1 à 7, dans laquelle les copolymères à gradient ont un poids moléculaire moyen en nombre $M_n$ de 2 000 à 20 000 g/mole.

9. utilisation de copolymères à gradient selon l'une des revendications 1 à 8, dans laquelle les monomères qui interagissent avec le solide à disperser ou les solides à disperser sont sélectionnés dans le groupe constitué des (méth)acrylates d'aminoalkyle dont la fonctionnalité amine est soit convertie en sel avec des acides soit convertie en groupes ammonium quaternaire à l'aide d'agents d'alkylation, et la 1-[2-(méthacryloyloxy)-éthyl]-2-imidazolidinone.

10. Utilisation de copolymères à gradient comme agents de dispersion selon l'une ou plusieurs des revendications 1 à 9 pour la dispersion de solides dans des solvants organiques et/ou dans l'eau, éventuellement en présence de liants et de substances auxiliaires habituelles pour les peintures.

11. utilisation de copolymères à gradient comme agents de dispersion selon la revendication 10, dans laquelle les solides sont des pigments et/ou des charges.

12. utilisation de copolymères à gradient comme agents de dispersion selon l'une ou plusieurs des revendications 1 à 9 pour la préparation d'un agent de recouvrement, dans laquelle un liant, un ou plusieurs solvants organiques et/ou de l'eau, des pigments et/ou des charges, l'agent de dispersion et éventuellement d'autres substances auxiliaires habituelles sont dispersées ensemble.

13. Utilisation de copolymères à gradient comme agents de dispersion selon l'une ou plusieurs des revendications 1 à 12, dans laquelle les solides à disperser sont recouverts par les copolymères à gradient.

14. Agents de recouvrement, pâtes et/ou masses de moulage qui contiennent des copolymères à gradient comme agents de dispersion, les copolymères à gradient étant obtenus par polymérisation vivante contrôlée de monomères éthyléniquement insaturés par recours à un initiateur monofonctionnel qui n'est pas un polymère, les copolymères à gradient possédant le long de la chaîne polymère une transition de propriétés hydrophiles à propriétés hydrophobes, dans laquelle :

a) un monomère (I) est apporté en continu à un monomère (II) avec réaction, ou

b) un monomère (I) et un monomère (II) sont apportés en continu à des vitesses de dosage différentes dans un récipient de réaction pour y réagir,

des groupes qui en tant que tels ou après une autre conversion chimique du polymère à gradient interagissent avec le solide à disperser ou avec les solides à disperser sont insérés dans le copolymère à gradient soit par le monomère (I) soit par le monomère (II) et

des groupes qui sont compatibles avec le milieu liquide ou solide de dispersion sont insérés dans le copolymère à gradient par l'intermédiaire de l'autre monomère,

soit le monomère (I) soit les produits de l'autre conversion chimique du monomère (I), d'une part, soit le monomère (II) ou les produits de l'autre conversion chimique du monomère (II), d'autre part, possédant des propriétés hydrophobes, et l'autre monomère ou les produits de l'autre conversion chimique de l'autre monomère possédant des propriétés hydrophiles, les propriétés d'hydrophobicité et d'hydrophilicité étant définies de la façon suivante : des propriétés hydrophiles prédominent lorsque le paramètre de solubilité est supérieur ou égal à 22 $J^{1/2}/cm^{3/2}$ et des propriétés hydrophobes prédominent lorsque le paramètre de solubilité est inférieur à $22J^{1/2}/cm^{3/2}$,

les termes de "monomère (I)" et "monomère (II)" comprenant également des mélanges de monomère (I), d'une part, et de monomère (II), d'autre part.

15. Agents de revêtement, pâtes et/ou masses de moulage selon la revendication 14, dans lesquels les copolymères à gradient ont un poids moléculaire moyen en nombre $M_n$ de 2 000 à 20 000 g/mole.

16. Agents de revêtement, pâtes et/ou masses de moulage selon l'une ou plusieurs des revendications 14 ou 15, qui contiennent un ou plusieurs solides, solvants organiques et/ou de l'eau, éventuellement en présence de liants et des substances auxiliaires habituelles pour peintures.

17. Agents de recouvrement, pâtes et/ou masses de moulage selon la revendication 16, dans lesquels le ou les solides sont des pigments et/ou des charges.

18. Agents de revêtement, pâtes et/ou masses de moulage selon les revendications 16 ou 17, dans lesquels le ou les solides sont revêtus du copolymère à gradient.